**Europäisches Patentamt**

**European Patent Office**

**Office européen des brevets**

(19)

(11) Numéro de publication : **0 367 820 B1**

(12)                **FASCICULE DE BREVET EUROPEEN**

(45) Date de publication du fascicule du brevet :
31.03.93 Bulletin 93/13

(51) Int. Cl.⁵ : **A47J 37/07**

(21) Numéro de dépôt : **89906126.1**

(22) Date de dépôt : **03.05.89**

(86) Numéro de dépôt international :
**PCT/FR89/00218**

(87) Numéro de publication internationale :
**WO 89/10720 16.11.89 Gazette 89/27**

(54) **APPAREIL DE CUISSON SUR GRIL DE TYPE BARBECUE.**

(30) Priorité : **06.05.88 FR 8806112**

(43) Date de publication de la demande :
**16.05.90 Bulletin 90/20**

(45) Mention de la délivrance du brevet :
**31.03.93 Bulletin 93/13**

(84) Etats contractants désignés :
**AT BE CH DE GB IT LI LU NL SE**

(56) Documents cités :
**FR-A- 2 259 572**

(56) Documents cités :
**FR-A- 2 613 206**
**US-A- 1 883 946**
**US-A- 2 867 208**
**US-A- 3 651 796**
**US-A- 3 667 448**
**US-A- 4 170 173**

(73) Titulaire : **PIKETTY, Jean, Louis**
**4, rue Léonce-Reynaud**
**F-75116 Paris (FR)**

(72) Inventeur : **PIKETTY, Jean, Louis**
**4, rue Léonce-Reynaud**
**F-75116 Paris (FR)**

EP 0 367 820 B1

Jouve, 18, rue Saint-Denis, 75001 PARIS

## Description

La présente invention concerne un appareil de cuisson sur gril d'aliments solides, de type barbecue. Il comporte au moins, sous le foyer où brûlent les braises, un élément réalisé en un matériau minéral naturel à haut pouvoir réflecteur calorifique, c'est-à-dire bon isolant thermique.

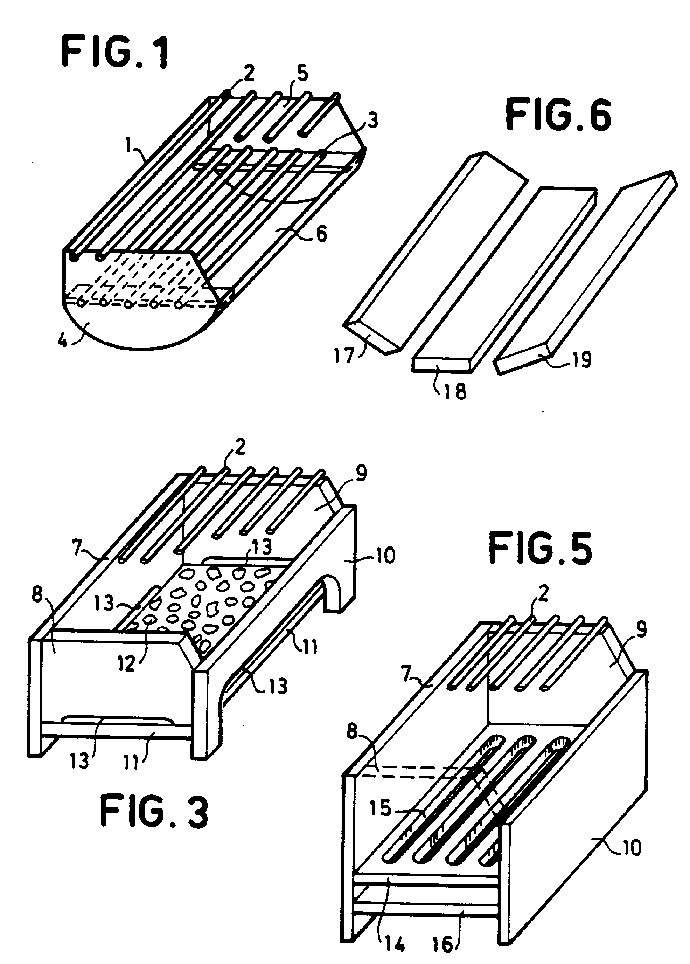

Les appareils de cuisson de type barbecue sont bien connus. La plupart sont présentés sur pieds qui amènent le plan à hauteur de travail pour l'utilisateur, mais certains, dits modèles de jardin, sont intégrés dans une construction en pierre ou en brique, qui remplace les pieds. Cependant, dans les deux cas, l'appareil de cuisson comporte une partie commune, le barbecue proprement dit, qui est représenté en figure 1.

Un barbecue, selon l'art connu, comporte une enveloppe extérieure, ou bac 1, qui supporte, à sa partie supérieure, une grille de cuisson 2, et, à sa partie inférieure, une grille de combustion 3, légèrement éloignée du fond du bac 1, pour permettre la circulation de l'air. Ce sont les faces latérales 4 et 5 du bac qui supportent les grilles 2 et 3, tandis que la face avant 6 du bas est avantageusement diminuée en hauteur pour permettre d'introduire le combustible.

La chambre de combustion est donc délimitée par les parois du bac 1 et par la grille de combustion 3. Or, le bac est très généralement réalisé soit en fonte d'aluminium ou de fer, soit en tôle, c'est-à-dire en matériau métallique qui a un très bon pouvoir conducteur calorifique. Même si le barbecue est intégré dans une architecture de brique ou de pierre, il comporte ce bac 1 métallique qui assure l'organisation des grilles et de la chambre de combustion.

L'enveloppe étant métallique, elle rayonne la plus grande partie de la chaleur fournie par la combustion, et le rendement thermique est très mauvais. C'est pourquoi les barbecues sont très généralement utilisés en plein air, ou, à la rigueur, sur une terrasse ou un balcon, mais pas à l'intérieur d'une habitation, parce qu'ils rayonnent trop de chaleur.

Toutefois, il est connu, dans ces cas de déperdition calorifique, d'isoler thermiquement la source du rayonnement. Ainsi, le document US-A-3 667 448 décrit un barbecue portable dont tout le foyer est métallique. En vue de régulariser la circulation d'air sous le combustible, celui-ci est placé sur un lit de morceaux de roches volcaniques qui sont un bon isolant thermique. Mais elles stockent et rationnent la chaleur dégagée vers le fond du barbecue, sans la réfléchir.

Un autre barbecue portable est décrit dans le document US-A-2 867 208. Il comporte une boîte à feu qui chauffe latéralement un four. Afin de les isoler thermiquement, les parois de la boîte à feu et la doublure des parois du four sont faites en un matériau isolant, agrégat de quatre constituants non spécifiés, mais connu sous le nom de Luminite. La disposition latérale de la boîte à feu ne permet pas de réfléchir la chaleur sur la grille de cuisson, placée sur le four.

L'invention permet de remédier à cet inconvénient, en proposant un barbecue, dont, au moins la partie inférieure, située sous la chambre de combustion, constitue un réflecteur thermique, de sorte que le rayonnement calorifique fourni par le combustible est réfléchi principalement sur les aliments posés sur la grille de cuisson.

Le rendement thermique est encore amélioré selon l'invention, si les parois du bas, armature du barbecue, constituent également des réflecteurs thermiques, de sorte que la chambre de combustion toute entière forme un dispositif de focalisation de l'énergie thermique sur les aliments à cuire.

Ces objectifs sont atteints selon l'invention, en réalisant les parties réfléchissantes du barbecue en matériaux minéraux isolants thermiques, mais ayant une bonne tenue mécanique et thermique, jusqu'aux environs de 1000°C. Parmi ces matériaux, la pierre ponce, volcanique, est particulièrement intéressante par ses caractéristiques thermiques, sa rigidité et sa légéreté. La terre de diatomées est aussi dotée de très bonnes caractéristiques, mais nécessite d'être moulée, et elle est friable.

D'autre matériaux naturels tels que la lave ou la magnésie, peuvent être employés à la réalisation d'un barbecue selon l'invention, mais ils ne présentent pas de caractéristiques aussi intéressantes que la pierre ponce, ou nécessitent, comme la magnésie, d'être frittés.

De façon plus précise, l'invention concerne un appareil de cuisson sur gril, de type barbecue, comportant une chambre de combustion qui supporte une grille de cuisson (2), caractérisé en ce qu'au moins la paroi de fond (11) de la chambre de combustion est en un matériau minéral, à faible conductivité thermique, et constitue un réflecteur vers la grille de cuisson de la chaleur dégagée par la combustion du combustible solide déposé dans la dite chambre.

L'invention sera mieux comprise par la description qui suit de quelques exemples de réalisation, cette description s'appuyant sur les figures jointes en annexe qui représentent :

Figure 1 :     vue de trois-quart dans l'espace d'un barbecue selon l'art connu, précédemment décrite.
Figure 2 :     coupe verticale d'un barbecue selon l'invention dans une première forme de réalisation.
Figure 3:     vue de trois quarts dans l'espace du barbecue de la figure précédente.

Figures 4 et 5 :   coupe verticale et vue de trois quart, respectivement, d'un barbecue selon l'invention dans une deuxième forme de réalisation.

Figure 6 :   vue partielle de la grille de combustion d'un barbecue de la deuxième forme de réalisation.

Figures 7 et 8 :   coupe verticale et vue de trois quart respectivement d'un barbecue selon l'invention dans une troisième forme de réalisation

Les figures 2 et 3 se rapportent à la même forme de réalisation d'un barbecue selon l'invention, et peuvent être décrites simultanément. Ce barbecue comprend un bac formant armature, constitué par une face longitudinale arrière 7, deux faces latérales 8 et 9 et une face longitudinale avant 10 : ces quatre faces sont solidaires, de façon à fournir l'armature mécanique du barbecue. La face avant 10 est avantageusement de moindre hauteur que les autres faces, afin de faciliter l'introduction du combustible dans la chambre de combustion.

Selon l'invention, la grille de combustion est constituée d'au moins une plaque 11, d'un matériau réfractaire tel que la pierre ponce. La pierre ponce qui se taille de façon relativement aisée, est une plaque qui a 2 à 3 cm d'épaisseur, supporte une température de l'ordre de 800 à 1000°C sur une face, et n'est qu'à 80 ou 90°C sur une autre face : c'est donc un bon isolant qui diminue considérablement la déperdition calorifique par le dessous du barbecue.

Mais la plaque 11, qui referme par en dessous la chambre de combustion est pleine, et ne permet pas l'arrivée de l'air pour la combustion. C'est un autre objet de l'invention que de prévoir que la grille de combustion est ici remplacée par un lit de morceaux de matériaux réfractaires, tel que des morceaux de pierre ponce 12 posés sur la plaque 11 de pierre ponce. Par coopération avec des évents 13 dans les parois latérales, ce lit de morceaux de pierre ponce assure une bonne aération inférieure du combustible, et participe à l'isolation par la face inférieure du barbecue.

Les faces latérales 8 et 9 du bac supportent, de façon classique, une grille métallique de cuisson 2 : sur la figure 3, seuls quelques bareaux ont été amorcés, de façon à rendre la figure plus claire.

Les faces longitudinales 7 et 10 et latérales 8 et 9 du bac, peuvent être réalisées de façon connue en tôle ou en fonte, mais l'invention prévoit de les réaliser avantageusement en plaque de matériau réfractaire tel que la pierre ponce. Cet appareil de l'invention présente un double avantage.

Si les faces du barbecue sont réalisées en plaques de pierre ponce, la chambre de combustion est mieux isolée, et la chaleur dégagée par la combustion est mieux focalisée sur la grille de cuisson, d'où économie de combustible et cuisson plus rapide.

Mais si, de plus, la plaque 11 de fond de la chambre de combustion est fixée à quelques centimtètres, 4 ou 5 cm environ, de l'extrémité inférieure de deux plaques opposées du bac - par exemple les plaques longitudinales 7 et 10 - celles-ci font office de pieds ou de support pour le barbecue. Les deux autres plaques du bac - dans ce cas les plaques latérales 8 et 9 - s'arrêtent à hauteur de la plaque 11 de fond de la chambre de combustion, de façon à permettre une circulation d'air sous le barbecue.

Un tel barbecue selon l'invention, dont la chambre de combustion est bien isolée par l'emploi de plaques de matériaux réfractaires tel que la pierre ponce, constitue un barbecue d'intérieur. Bien isolé, ne rayonnant pas de chaleur, c'est un instrument de cuisson comparable à un brûleur à gaz dans une cuisinière à gaz par exemple.

Les figures 4 et 5 représentent une deuxième forme de réalisation du barbecue selon l'invention. Elles sont établies dans les mêmes conditions que les figures 2 et 3.

Dans cette variante, le fond de la chambre de combustion est constitué par deux plaques. La plaque supérieure 14 est une plaque de matériau réfractaire tel que la piere ponce, mais elle est ajourée par une pluralité de fentes 15 qui la traversent sur toute son épaisseur et laissent passer l'air de combustion.

Sous la plaque 14, ajourée, se trouve une plaque pleine 16, en pierre ponce également, destinée à recueillir les braises et cendres qui tombent à travers les fentes 15 de la plaque supérieure 14.

Il est également possible, dans cette seconde réalisation, de disposer un lit de morceaux de matériaux réfractaires, tel que la pierre ponce, sur la grille ajourée 14. Ce lit n'est pas représenté sur les figures 4 et 5 pour ne pas occulter les fentes 15. Un lit de morceaux de pierre ponce présente l'avantage de répartir l'air de combustion mieux que les fentes 15, et de régulariser la combustion.

La plaque 16, qui sert de cendrier, est avantageusement amovible, par exemple en l'extrayant par la face latérale 8 du barbecue. Cela permet, outre l'élimination des cendres, d'allumer plus facilement le barbecue. La plaque 16 étant retirée, le barbecue, garni de charbon de bois, est posé sur un brûleur de cuisinière à gaz. Les flammes du gaz, passant à travers les fentes 15 de la plaque 14, amènent très rapidement le charbon de bois à la combustion, sans paser par le stade habituel de la mise à feu par de l'alcool à brûler. La combustion étant amorcée, la plaque pleine 16 est remise en place, et le barbecue peut être posé sur une table.

Bien entendu, comme dans la première forme de réalisation, les faces longitudinales et latérales du barbecue sont avantageusement en matériaux réfractaires, et laissant passer l'air sous le barbecue, pour la combustion et le refroidissement.

La figure 6 représente une vue de trois quart dans l'espace de la seule grille de combustion d'un barbecue selon l'invention. Dans les figures précédentes, le fond de la chambre de combustion est constitué par une plaque pleine 11 pour les figures 4 et 5. Ce fond de la chambre de combustion, peut, selon l'invention, ne pas être monolithique, mais constitué de plusieurs pièces en forme de lattes telles que 17, 18 et 19.

Ces lattes 17, 18 et 19 peuvent, dans un premier cas, être disposés dans un même plan : jointives, elles reconstituent la plaque plane et pleine 11 des figures 2 et 3 ; disposées avec écartement entre elles, elles reconstituent la plaque ajourée 14 des figures 4 et 5 avec des fentes 15 entre lattes. Mais elles peuvent également, telles que représentées, en figure 6, être disposées de façon à ce que leur ensemble présente une concavité tournée vers le haut, c'est-à-dire vers la grille de cuisson 2 dans ce cas, elles forment avec les faces longitudinales 7 et 10 une structure qui focalise mieux la chaleur vers la grille de cuisson. Dans ce second cas, il est bien entendu qu'elles sont soit jointives, soit espacées, comme précédemment.

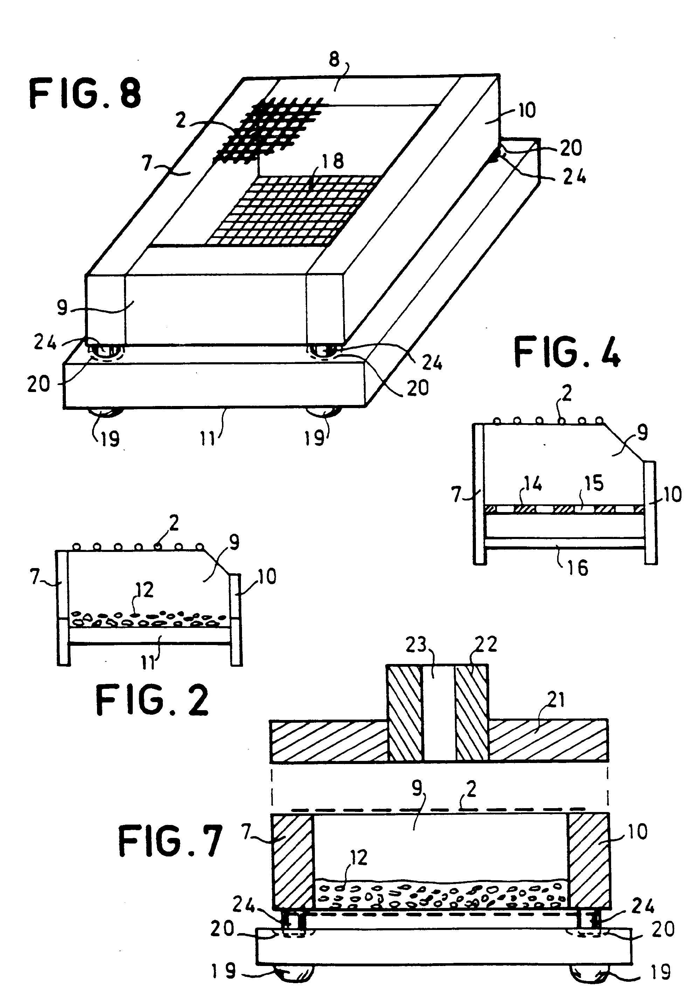

Les figures 7 et 8 représentent une vue en coupe et de trois-quart, d'une forme préférée de barbecue selon l'invention : un modèle de table, qui permet la grillade sur table, au même titre que par exemple les réchauds à foudue ou à raclette.

Ce barbecue de table est constitué par une chambre de combustion délimitée par quatre faces parallélipédiques en pierre ponce 7, 8, 9 et 10, solidarisées, et par la plaque de fond 11, en pierre ponce également, formant réflecteur thermique. Le cadre de la chambre de combustion est fixé sur la plaque de fond 11, au moyen d'une pluralité d'entretoises (24), qui ont un triple objectif:

- solidariser l'ensemble,
- permettre l'entrée d'air sous le foyer, entre le cadre et la plaque de fond 11,
- coincer, entre elles et le cadre 7, 8, 9 et 10, une première grille métallique 18 qui soutient le combustible, du charbon de bois généralement.

Une seconde grille métallique de cuisson 2, amovible, est posée sur le barbecue de table, après qu'il ait été garni de charbon de bois, et le cas échéant, d'un lit de pierre ponce en grains 12.

Des pieds 19, sous forme de tampons de caoutchouc par exemple, peuvent avantageusement compléter ce barbecue de table : ils permettent une meilleure assise, et éloignent la plaque de fond 11 du bois de la table et de la nappe qui la recouvre.

Dans une variante de réalisation, la plaque de réalisation 11 n'est pas solidaire de la chambre de combustion. Cela permet de poser le barbecue, garni de charbon de bois, sur un brûleur à gaz, pour allumer le charbon de bois, comme cel a déjà été décrit. La combustion étant amorcée, la chambre de combustion est posée sur sa plaque de fond 11 : les entretoises (24) sont alors avantageusement bloquées, pour les empêcher de glisser latéralement, par des cuvettes 20 creusées dans la plaque de fond 11, qui sont représentées en pointillés sur les figures 7 et 8.

Pour allumer le barbecue, on peut avantageusement poser sur la grille de cuisson 2 un couvercle 21, constitué par une plaque de pierre ponce qui comporte une petite 22 cheminée percée d'un trou 23 d'appel d'air.

L'ensemble de la chambre de combustion 7, 8, 9, 10, formée au dessus par le couvercle 21, 22, et remplie de charbon de bois, constitue ainsi un corps noir, dans lequel l'élévation de température est beaucoup plus rapide que s'il n'y a pas de couvercle. Le charbon de bois étant entré en combustion, le couvercle 21, 22 est retiré, pour rendre au barbecue son usage normal.

La chambre de combustion peut également être de forme torique, taillée dans un cylindre de pierre ponce.

Dans toutes les formes de réalisation du barbecue selon l'invention, les différentes pièces en pierre ponce sont solidarisées, lorsqu'elles doivent l'être, soit par des moyens métalliques, tels qu'agrafes ou tiges filetées, soit par maçonnerie, au moyen d'un ciment résistant au feu.

Parmi les différents matériaux réfractaires qui peuvent être utilisés pour réaliser le barbecue selon l'invention, la pierre ponce est celui qui est le plus intéressant. En effet, si l'on considère la conductivité thermique exprimée en W/m K (= k x cal/sec cm C), les roches courantes ont une conductivité :

```
- basalte      :    k x 0,0052        avec k = 418

- granite      :    k x 0,0045

- gypse        :    k x 0,0031

- magnésie     :    k x 0,0027 à 0,0072

   - marbre    : k x 0,0071
```

qui est beaucoup plus élevée que celle de la pierre ponce Kx 0,00013.

La structure poreuse de la pierre ponce lui confère cette remarquable qualité d'isolant thermique, supérieure à celle de l'amiante(kx0,00019) ou des briques de terre de diatomées(kx0,00030) qui sont, de plus, fragiles. La pierre ponce peut être naturelle, ou de synthèse, par moulage de poudre liée par un ciment minéral,

La qualité de la pierre ponce, comme isolant thermique, est mise en évidence, par l'exemple numérique qui suit.

Considérons le barbecue de table des figures 7 et 8, dont la chambre de combustion aurait 10 X 10 X 3 cm, étant formée par quatre faces de 14 X 2 X 3 cm. Si on y dispose un lit de 1 cm de pierre ponce en grains, pour répartir l'air de combustion, le volume de charbon de bois est 10 X 10 X 2 cm = 200 cm$^3$, qui correspondent à 50 g de carbone, dont la combustion fournit 10$^6$ J (250 Kcal) Ces 50 g de carbone nécessitent pour leur combustion environ 150 g d'oxygène, car le rendement n'est pas égal à 100%, soit 750 litres d'air : le charbon de bois brûle en 30 minutes, et le mélange air + $CO_2$ à 200°C en sortie, entraîne environ 0,2x10$^6$J(50 Kcal)

Le dispositif pèse approximativement 1 Kg. La température moyenne est de l'ordre de 200°C : 600°C sur ses faces internes, 80°C sur ses faces externes si l'épaisseur des parois est de 3 cm. La chaleur spécifique de la pierre ponce étant 1 KJ/Kg K (0,22 Kcal/Kg°C), le barbecue de table a emmagasiné environ 0,2x10$^6$J(50 Kcal)

La différence avec la chaleur fournie par la combustion est de 0,8x10$^6$J (200 Kcal), y compris les 0,2x10$^6$J (50 Kcal) qui sont entraînées par les gaz chauds : ce sont ces 0,8x10$^6$J (200 Kcal) assurent la cuisson des aliments, posés sur la grille supérieure 2.

Un barbecue conventionnel ne permettrait de recueillir que moins de 0,2x10$^6$J (50 Kcal) pour cuire les aliments.

Un barbecue selon l'invention est utilisé, soit comme modèle d'extérieur, posé sur pieds ou incorporé dans une structure, soit comme modèle d'intérieur, incorporé dans une table de cuisson, soit comme barbecue de table.

L'invention comprend les variantes de structures, si elles sont évidentes pour l'homme de l'art. Elle est précisée par les revendications suivantes.


**Revendications**

1.  Appareil de cuisson sur gril, de type barbecue, comportant une chambre de combustion formée par une paroi de fond (11) et quatre parois latérales (7 à 10) ainsi qu'une grille de cuisson (2), un combustible solide étant placé dans la chambre de combustion sous la grille de cuisson, cet appareil étant caractérisé en ce que au moins la paroi de fond (11) de la chambre de combustion constitue un réflecteur thermique formé par une plaque d'un matériau minéral à structure poreuse, de coefficient de conductivité thermique de l'ordre de 0,05 **W/m** K (0,00013 cal/sec/cm/°C).

2.  Appareil de cuisson selon la revendication 1, caractérisé en ce que, en vue de focaliser la chaleur dégagée par la combustion vers la grille de cuisson (2), les parois latérales (7,8,9,10) de la chambre de combustion sont réalisées dans le même matériau minéral à structure poreuse que celui qui constitue la paroi de fond (11) de la chambre de combustion.

3.  Appareil de cuisson selon la revendication 1, caractérisé en ce que le matériau minéral à faible conductivité thermique qui constitue le réflecteur thermique est de la pierre ponce naturelle ou de synthèse.

4.  Appareil de cuisson selon la revendication 1, caractérisé en ce que les parois de fond (11) et latérales (7,8,9,10) de la chambre de combustion sont constituées par des plaques de pierre ponce.

5.  Appareil de cuisson selon la revendication 1, caractérisé en ce que, en vue de répartir l'air de combustion, un lit de particules de pierre ponce (12) est déposé sur la paroi de fond (11) de la chambre de combustion.

6.  Appareil de cuisson selon la revendication 1, caractérisé en ce qu'il comprend en outre, dans la chambre de combustion, une grille de combustion constituée par une plaque de pierre ponce (14) comportant des fentes (15), la transversant sur toute son épaisseur.

7.  Appareil de cuisson selon la revendication 1, caractérisé en ce qu'il comprend en outre, dans la chambre de combustion, une grille de combustion constituée par une pluralité de lattes de pierre ponce (17,18,19) disposées de façon à ce que leur ensemble présente une concavité tournée vers la grille de cuisson (2).

**8.** Appareil de cuisson selon la revendication 1, caractérisé en ce qu'il comporte une chambre de combustion formée par quatre parois latérales en pierre ponce (7,8,9,10), parallélipédiques, fixées entre elles, et une première grille métallique de combustion (18) fixée sur la chambre de combustion au moyen d'une pluralité d'entretoises (24) qui ménagent une entrée d'air entre la dite grille (18) et la paroi de fond de la chambre de combustion, constituée par une plaque de pierre ponce (11) qui sert d'embase au dit barbecue, celui-ci étant complété par une seconde grille métallique (2), de cuisson.

**9.** Appareil de cuisson selon la revendication 8, caractérisé en ce que, afin de faciliter l'allumage du combustible, la paroi de fond est séparable de la chambre de combustion, et comporte une pluralité de cuvettes (20), creusées dans la paroi de fond qui coopérent avec une même pluralité d'entretoises.

**10.** Appareil de cuisson selon la revendication 8, caractérisé en ce que la chambre de combustion est constituée par un tore de pierre ponce, et est cylindrique au lieu d'être parallélipédique.

**11.** Appareil de cuisson selon la revendication 8, caractérisé en ce qu'il comporte en outre, pour faciliter l'allumage, un couvercle (21), amovible, constitué par une plaque de pierre ponce, traversée par une cheminée (22) percée d'un trou (23) d'appel d'air.

## Claims

**1.** Apparatus for cooking on a grill, of the barbecue type, comprising a combustion chamber comprising a botton plate (11) and for lateral flanks (7 to 10), for a solid combustible material located under a cooking grid (2), characterized by the fact that, in view of reflecting the heat provided by the combustion of the solid combustible material toward the cooking grid, at least the bottom plate (11) of the combustion chamber is made of a porous mineral material, of which the thermal conductivity factor is of the order of 0,05 W/m K (0,00013 Cal/sec/Cm/°C)

**2.** Apparatus for cooking, according to claim N° 1, characterized by the fact that, in view of focusing the heat provided by the combustion toward the cooking grid (2), the lateral flanks (7, 8, 9, 10) of the combustion chamber are made of the same porous mineral material as the one which constitutes the bottom flank (11) of the combustion chamber.

**3.** Apparatus for cooking, according to claim N° 1, characterized by the fact that the low thermal conductivity material which constitutes the heat reflector is the genuine pumice stone or artificial pumice stone.

**4.** Apparatus for coooking according to claim 1, characterized by the fact that the bottom (11) and lateral (7, 8, 9, 10) flanks of the combustion chamber are made of monolithic pumice stone plates.

**5.** Apparatus for cooking, according to claim N° 1, characterized by the fact that, in view of spreading the combustion air, a layer of pumice stone elements (12) is put on the bottom of the flank (11) of the combustion chamber.

**6.** Apparatus for cooking, according to claim N° 1, characterized by the fact that it includes in addition, in the combustion chamber, a combustion grid constituted by a pumice stone plate (14) including slots (15) crossing its whole thickness.

**7.** Apparatus for cooking, according to claim N° 1, characterized by the fact that it includes in addition, in the combustion chamber, a combustion grid constituted by a plurality of laths (17, 18, 19) made of pumice stone, assembled in such a manner that the whole gives a concavity oriented toward the cooking grill (2) focusing the heat provided by the combustion toward the said grid (2).

**8.** Apparatus for cooking, according to claim N° 1, characterized by the fact that it includes a combustion chamber built up with four pumice stone lateral flanks (7, 8, 9, 10), parallelipedic, bound together and a first combustion metallic grid (18) fixed to the combustion chamber by the mean of a plurality of "entretoises" (24) which organizes an input for the air between the said grid (18) and the bottom flank of the combustion chamber, constituted by a pumice stone plate (11) which acts as a platform to said barbecue, this one being completed by a second metallic grid (2) for cooking.

9. Apparatus for cooking, according to claim N° 8, characterized by the fact that, in order to facilitate the lighting of the combustible material, the bottom flank is disconnected from the combustion chamber and includes a plurality of cups (20), dug in the bottom plank, which cooperates with a same plurality of "entretoises".

10. Apparatus for cooking according to claim N° 8, characterized by the fact that the combustion chamber is constituted by a core of pumice stone and is cylindric instead of parallelipedic.

11. Apparatus for cooking, according to claim 8, characterized by the fact that it includes in addition, for making the lighting easier, a lid (21), removable, constituted by a plate of pumice stone, crossed by a chimney 22, including a hole (23) for the air circulation.


## Patentansprüche

1. Grillgerät, Typ Holzkohlengrill, mit einem aus Grundplatte (11) und vier Seitenwänden (7 bis 10) zusammengesetzten Brennraum, sowie einem Bratrost (2). In der Brennkammer, unter dem Bratrost, ist Platz für einen festen Brennstoff. Dieses Gerät zeichnet sich dadurch aus, dass mindestens die Grundplatte des Brennraumes einen thermischen Reflektor darstellt, bestehend aus einem mineralischen Werkstoff mit poröser Struktur, mit einem Wärmeleitkoeffizienten von ca.0,05 $W/m$ K(0,0013 cal/sec/cm/°C).

2. Grillgerät, wie in 1 beschrieben, jedoch sind zwecks Bündelung der bei der Verbrennung in Richtung des Bratrostes (2) abgegebenen Wärme die Seitenplatten (7,8,9,10) aus dem gleichen porösen mineralischen Werkstoff wie die Grundplatte (11) des Brennraumes.

3. Grillgerät, wie in 1 beschrieben, dadurch gekennzeichnet, dass als mineralischer, wärmedämmender Werkstoff für den thermischen Reflektor natürlicher oder synthetischer Bimmstein verwendet wurde.

4. Grillgerät wie in 1 beschrieben, dadurch gekennzeichnet, dass die Rück- (11) und Seitenplatten (7,8,9,10) des Brennraumes Bimssteinplatten sind.

5. Grillgerät wie in 1 beschrieben, dadurch gekennzeichnet, dass zur Verbreitung der Verbrennungsluft ein Bett von Bimssteinteilchen (12) auf der Grundplatte des Brennraumes (11) angebracht ist.

6. Grillgerät wie in 1 beschrieben, jedoch im Brennraum mit einem aus einer geschlitzten (15) Bimssteintplatte bestehenden Brennrost (14) vesehen, der die gesamte Breite des Brennraumes einnimmt.

7. Grillgerät wie in 1 beschrieben, jedoch im Brennraum mit einem Brennrost versehen, der aus einer Vielzahl an Bimssteinlatten (17,18,19) besteht, die so angeordnet sind, dass ihre Gesamtheit eine auf den Bratrost gerichtete Höhlung darstellt.

8. Grillgerät wie in 1 beschrieben, durch einen Brennraum gekennzeichnet, der aus vier in Form eines Quaders aneinander befestigten Seitenwänden aus Bimsstein (7,8,9,10) sowie einem am Brennraum mit Hilfe einer Vielzahl von Verstrebungen (21) verankerten metallischen Brennrost (13) besteht und, wodurch der Lufteintritt zwischen dem erwähnten Rost und der aus einer Bimssteinplatte (11) bestehenden Brennraumgrundplatte ermöglicht wird. Diese Platte dient zugleich als Grundplatte des oben beschriebenen und durch einen zweiten Bratrost aus Metall vervollständigten Grillgerätes.

9. Grillgerät wie an 8 beschrieben, dadurch gekennzeichnet, dass zwecks Erleichterung des Anzündens die Grundplatte vom Brennraum abgebaut werden kann. In die Grundplatte sind eine Vielzahl von Vertiefungen (20) eingelassen, die mit der gleichen Zahl an Verstrebungen verbunden sind.

10. Grillgerät wie in 8 beschrieben, dadurch gekennzeichnet, dass der Brennraum aus einer Schale aus Bimsstein besteht und rund anstatt rechteckig ist.

11. Grillgerät wie in 8 beschrieben, dadurch gekennzeichnet, dass zwecks Erleichterung des Anzündens ein beweglicher Deckel (24) in Form einer Bimssteinplatte angebracht ist, der von einem Rauchabzug (22) mit einem Lufteinlassloch (23) durchquert wird.

# FIG.1

# FIG.6

# FIG.3

# FIG.5

FIG. 8

FIG. 4

FIG. 2

FIG. 7